# EUROPÄISCHE PATENTANMELDUNG

(11) **EP 2 387 917 A1**
(43) Veröffentlichungstag der Anmeldung: **23.11.2011**
(21) Anmeldenummer: 11165425.7
(22) Anmeldetag: 10.05.2011
(51) Int. Cl.: A47F 5/08, F16B 45/00

(54) **Wandhalter für ein Magnetwandsystem**

(30) Priorität: 20.05.2010 DE 102010021740
(71) Anmelder: OCTANORM-VERTRIEBS-GMBH FÜR BAUELEMENTE, 70794 Filderstadt (DE)
(72) Erfinder: Bruder, Hans, 72631, Aichtal (DE)
(74) Vertreter: Patentanwälte Ruff, Wilhelm, Beier, Dauster & Partner

(57) **Zusammenfassung**

Die Erfindung betrifft einen Wandhalter für ein Magnetwandsystem mit einem Fußabschnitt (12,56,80) mit wenigstens einem Magneten (16) zum Aufsetzen auf eine magnetisierbare Wandplatte (20) und einem mit dem Fußabschnitt (12,56,80) verbundenen Halterabschnitt (14,40,42,64,68,84).

Erfindungsgemäß weist der Fußabschnitt (12,56,80) ein Gehäuse (26) mit wenigstens einer Öffnung (30,60,82) auf, wobei innerhalb des Gehäuses (26) hinter der Öffnung (30,60,82) ein Hohlraum (28) ausgebildet ist, der zusammen mit der Öffnung (50,60,82) einen Hinterschnitt bildet, und dass der Halterabschnitt (14,40,42,64,68,84) wenigstens ein passend zur Öffnung (30,60,82) und dem Hinterschnitt ausgebildetes Eingreifteil (32) aufweist.

## Beschreibung

Die Erfindung betrifft einen Wandhalter für ein Magnetwandsystem mit einem Fußabschnitt mit wenigstens einem Magneten zum Aufsetzen auf eine magnetisierbare Wandplatte und einem mit dem Fußabschnitt verbundenen Halterabschnitt.

Mit der Erfindung soll ein flexibel einsetzbarer Wandhalter für ein Magnetwandsystem bereitgestellt werden.

Erfindungsgemäß ist hierzu ein Wandhalter für ein Magnetwandsystem mit einem Fußabschnitt mit wenigstens einem Magneten zum Aufsetzen auf eine magnetisierbare Wandplatte und einem mit dem Fußabschnitt verbundenen Halterabschnitt vorgesehen, bei dem der Fußabschnitt ein Gehäuse mit wenigstens einer Öffnung aufweist, wobei innerhalb des Gehäuses hinter der Öffnung ein Hohlraum ausgebildet ist, der zusammen mit der Öffnung einen Hinterschnitt bildet, und bei dem der Halterabschnitt wenigstens ein passend zur Öffnung und dem Hinterschnitt ausgebildetes Eingreifteil aufweist.

Auf diese Weise kann der Fußabschnitt mit zahlreichen unterschiedlichen Halterabschnitten kombiniert werden, solange diese Halterabschnitte jeweils ein passend zur Öffnung und dem Hinterschnitt ausgebildetes Eingreifteil aufweisen. Der erfindungsgemäße Wandhalter kann dadurch in sehr flexibler Weise eingesetzt werden, da die Fußabschnitte mit dem wenigstens einem Magneten für unterschiedliche Halterabschnitte verwendet können. Die Halterabschnitte sind in der Regel sehr einfach aufgebaut und werden in großen Stückzahlen kostengünstig hergestellt. Im Vergleich zu den Halterabschnitten sind die Fußabschnitte mit den Magneten deutlich teurer. Mit dem erfindungsgemäßen Wandhalter kann nun die Zahl der für unterschiedliche Anwendungen erforderlichen Fußabschnitte und damit die aufzuwendenden Kosten deutlich verringert werden. Beispielsweise kann ein Ladenbetreiber sich mehrere Sätze unterschiedlicher Halterabschnitte zulegen. Er benötigt aber lediglich einen Satz der Fußabschnitte, um erforderlichenfalls umdekorieren und andere Halterabschnitte verwenden zu können. Dadurch, dass die gleichen Fußabschnitte mit unterschiedlichen Halterabschnitten verwendet werden können, ist die Herstellung der Fußabschnitte in großer Stückzahl kostengünstig möglich.

In Weiterbildung der Erfindung weist die Öffnung wenigstens einen langgestreckten Abschnitt mit einem Längen-/Breitenverhältnis > 1 auf. Vorteilhafterweise ist der langgestreckte Abschnitt der Öffnung im montierten Zustand des Wandhalters waagerecht angeordnet und die Öffnung bildet zusammen mit dem Hohlraum einen innerhalb des Gehäuses oberhalb der Öffnung liegenden Hinterschnitt aus.

In eine solche Öffnung kann ein einfaches L-förmiges Eingreifteil eingehängt werden. Das Einhängen eines solchen Eingreifteils des Halterabschnitts kann dabei durch eine einfache Drehbewegung erfolgen. Ein Einsetzen und Herausnehmen des Eingreifteils kann dadurch problemlos und schnell erfolgen und dennoch ist der Halterabschnitt über das Eingreifteil zuverlässig an dem Fußabschnitt gesichert.

In Weiterbildung der Erfindung ist die Öffnung kreuzförmig ausgebildet.

Das Vorsehen einer kreuzförmigen Öffnung ist in Bezug auf einen flexiblen Einsatz des erfindungsgemäßen Wandhalters vorteilhaft. In kreuzförmige Öffnungen können unterschiedliche Eingreifteile eingesetzt werden. Zum einen können bekannte Spannschlösser verwendet werden, bei denen Klemmhaken exzenterbetätigt gespreizt und zurückgezogen werden und dadurch das Spannschloss und gegebenenfalls einen mit dem Spannschloss verbundenen Halterabschnitt mit dem Fußabschnitt verbinden. Darüber hinaus können in kreuzförmige Öffnungen hakenförmige Eingreifteile eingesetzt werden und es ist darüber hinaus auch möglich, ein Eingreifteil in eine kreuzförmige Öffnungen einzusetzen und dann parallel zur Öffnung zu verschieben, um das Eingreifteil zu sichern.

In Weiterbildung der Erfindung ist der Fußabschnitt rohrförmig ausgebildet, wobei ein Abschnitt der Außenwand des Fußabschnitts mit dem wenigstens einen Magneten und ein anderer Abschnitt der Außenwand des Fußabschnitts mit der wenigstens einen Öffnung versehen ist.

Auf diese Weise ist ein sehr stabiler und dabei kostengünstiger Aufbau des Fußabschnittes möglich. Beispielsweise kann als Fußabschnitt ein Metallrohr mit rechteckförmigem Querschnitt verwendet werden. Ein solches rechteckförmiges Metallrohr bietet zum einen plane Anlageflächen, um die Magneten des Wandhalters aufsetzen zu können und bietet außerdem einen hohlen Innenraum, so dass zusammen mit den Öffnungen ein Hinterschnitt ausgebildet werden kann.

Vorteilhafterweise weist der Querschnitt des rechteckrohrförmigen Fußabschnitts ein Längen-/Breitenverhältnis zwischen 2:1 und 5:1 auf.

Es hat sich gezeigt, dass ein solcher Querschnitt des Fußabschnitts eine sichere Befestigung von Eingreifteilen sowie auch genügend Platz für die Anordnung von Magneten bereitstellt, so dass auch große Haltekräfte erzielt werden können.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen dargestellten Ausführungsformen lassen sich dabei in beliebiger Weise miteinander kombinieren, ohne den Rahmen der Erfindung zu überschreiten. In den Zeichnungen zeigen:
- Fig. 1: eine perspektivische Ansicht von schräg vorne eines erfindungsgemäßen Wandhalters gemäß einer ersten Ausführungsform der Erfindung,
- Fig. 2: eine Ansicht des Wandhalters der Fig. 1 von schräg hinten,
- Fig. 3 bis 6: weitere Ansichten des Wandhalters der Fig. 1,
- Fig. 7: eine Ansicht auf die Schnittebene VII-VII in Fig. 6,
- Fig. 8: eine Ansicht des Fußabschnitts des Wandhalters der Fig. 1 von schräg vorne,
- Fig. 9: eine Ansicht des Fußabschnitts der Fig. 8 von schräg hinten,
- Fig. 10 bis 13: weitere Ansichten des Fußabschnitts der Fig. 8,
- Fig. 14: eine Ansicht auf die Schnittebene XIV-XIV der Fig. 13,
- Fig. 15: eine Ansicht auf die Schnittebene XV-XV der Fig. 13,
- Fig. 16: eine Ansicht der Schnittebene XVI-XVI der Fig. 13,
- Fig. 17: eine Ansicht einer Metallplatte aus dem Wandhalter der Fig. 8,
- Fig. 18 und Fig. 19: zwei Ansichten eines Magneten aus dem Wandhalter der Fig. 8,
- Fig. 20: zwei Halterabschnitte für den Wandhalter aus Fig. 1,
- Fig. 21: einen weiteren Halterabschnitt für den Wandhalter der Fig. 1,
- Fig. 22: einen Fußabschnitt für einen erfindungsgemäßen Wandhalter gemäß einer weiteren bevorzugten Ausführungsform der Erfindung von schräg vorne,
- Fig. 23: den Fußabschnitt der Fig. 22 von schräg hinten,
- Fig. 24 bis 26: weitere Ansichten des Fußabschnitts der Fig. 22,
- Fig. 27: einen Positionierstreifen aus dem Fußabschnitt der Fig. 22,
- Fig. 28: einen Fußabschnitt eines Wandhalters gemäß einer weiteren bevorzugten Ausführungsform der Erfindung von schräg vorne,
- Fig. 29: den Fußabschnitt der Fig. 28 von schräg hinten,
- Fig. 30 bis 32: weitere Ansichten des Fußabschnitts der Fig. 28,
- Fig. 33: zwei erfindungsgemäße Wandhalter mit jeweils einem Fußabschnitt gemäß Fig. 22 und Halterabschnitten, die ein Regalbrett tragen,
- Fig. 34: zwei erfindungsgemäße Wandhalter mit jeweils einem Fußabschnitt gemäß Fig. 22 und Halterabschnitten, die eine Kleiderstange tragen,
- Fig. 35: einen erfindungsgemäßen Wandhalter mit einem Fußabschnitt gemäß Fig. 28 und zwei mit dem Fußabschnitt verbundenen Halterabschnitten und
- Fig. 36: eine schematische abschnittsweise Darstellung des Wandhalters aus Fig. 35.

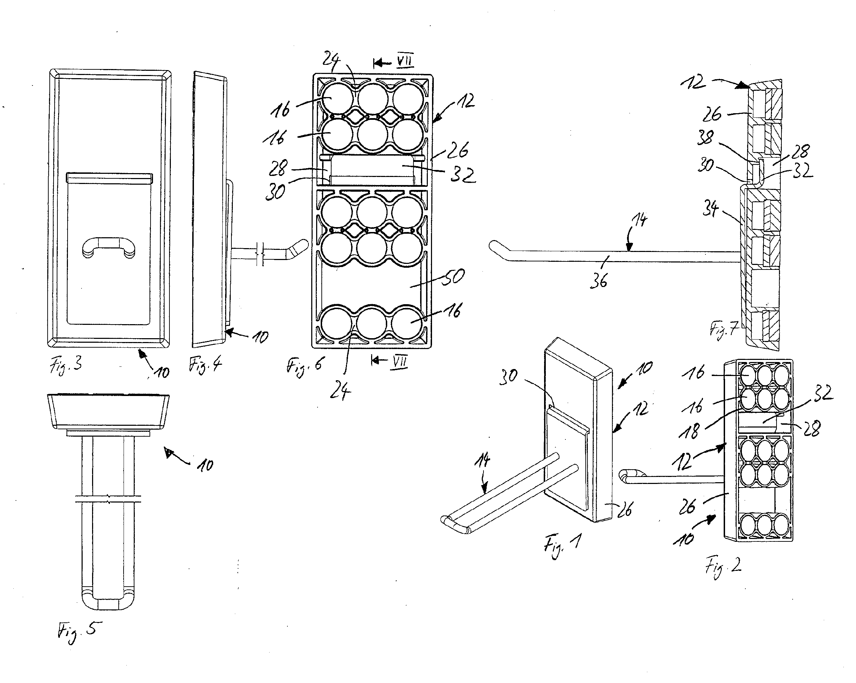

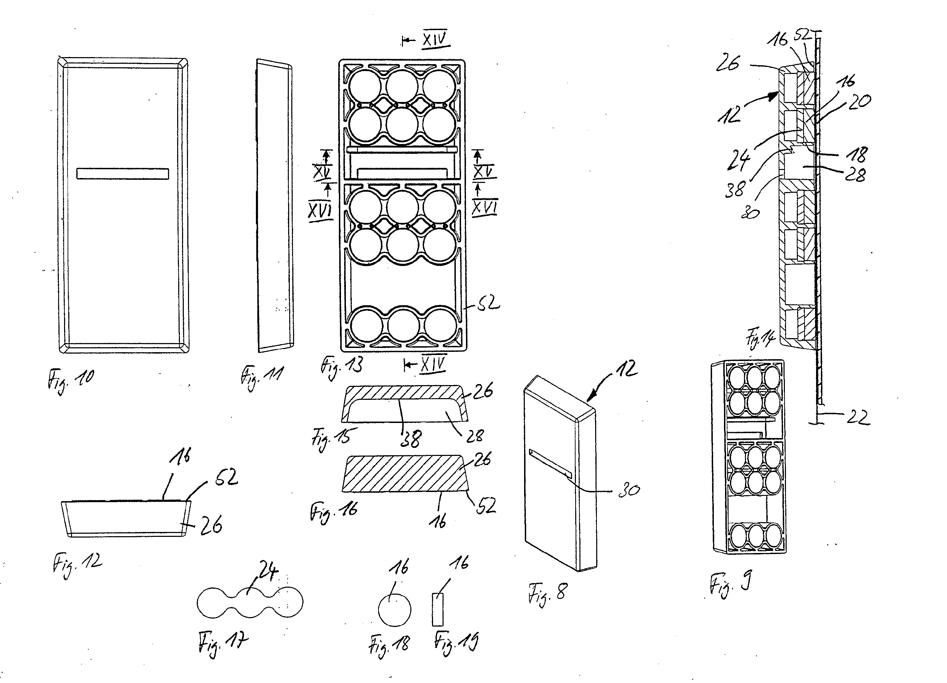

Die Darstellung der Fig. 1 zeigt einen erfindungsgemäßen Wandhalter 10 gemäß einer ersten bevorzugten Ausführungsform der Erfindung in einer Ansicht von schräg vorne. Der Wandhalter 10 weist einen Fußabschnitt 12 und einen Halterabschnitt 14 auf. Der Fußabschnitt 12 ist mit mehreren, in Fig. 1 nicht sichtbaren, Magneten versehen und dafür vorgesehen, auf eine magnetisierbare Wand eines Magnetwandsystems aufgesetzt zu werden, wie in Fig. 14 zu erkennen ist. Unter einer magnetisierbaren Wand wird eine Wand verstanden, die von einem Magneten angezogen wird. Der Halterabschnitt 14 ist lösbar an dem Fußabschnitt 12 angeordnet und ist dafür vorgesehen, Gegenstände zu halten, im Falle des Halterabschnitts 14 der Fig. 1 sogenannte Blisterverpackungen.

Wie in der Darstellung der Fig. 2 zu erkennen ist, sind insgesamt 15 scheibenförmige Magnete 16 in Führungen 18 an einer Rückseite des Gehäuses 12 eingesetzt. Die Magnete 16 liegen auf in der Darstellung der Fig. 2 nicht erkennbaren Metallplatten unmittelbar auf und werden durch die magnetische Haltekraft zwischen den Magneten 16 und diesen Metallplatten im Gehäuse gehalten.

Der Wandhalter 10 der Fig. 1 und 2 ist, wie bereits ausgeführt wurde, Bestandteil eines Magnetwandsystems und der Fußabschnitt 12, wie in Fig. 14 zu erkennen ist, dafür vorgesehen, auf die magnetisierbare Wandplatte 20 aufgesetzt zu werden. Die magnetisierbare Wandplatte 20 kann beispielsweise aus einem Stahlblech oder einer metallisch beschichteten Platte oder auch einer Kunststoffplatte mit magnetisierbaren Metallpartikeln bestehen. Die Wandplatte 20 kann unmittelbar auf einer Gebäudewand angebracht sein oder als separate Stellwand aufgebaut werden, dann beispielsweise noch hinterfüttert mit Stützplatten oder dergleichen. Zwischen dem Fußabschnitt 12 und der Wandplatte 20 ist eine Stoffbespannung 22 angeordnet. Die Stoffbespannung 22 dient dekorativen Zwecken. Anstelle einer Stoffbespannung 22 kann beispielsweise auch eine Bespannung aus dickerem Stoff, beispielsweise Leder oder Kunststoff, vorgesehen sein. Die Wandplatte 20 kann selbstverständlich auch unbeschichtet bleiben oder beispielsweise lackiert oder beschichtet sein. Die Magneten 16 werden bei der dargestellten Ausführungsform ausschließlich durch die magnetische Haltekraft zwischen den Magneten 16 und den Metallplatten 24 in dem Gehäuse 26 des Fußabschnitts 12 gehalten. Die Metallplatten 24 sind dazu in dem Gehäuse 26 verrastet. Die Führungen 18 dienen lediglich dazu, die Magneten 16 beim Einführen in das Gehäuse auf ihre vordefinierte Position auf den Metallplatten 24 zu leiten. Es ist aber selbstverständlich auch möglich, die Magneten 16 zusätzlich in dem Gehäuse 26 zu verkleben, beispielsweise um das Eindringen von Schmutz zwischen den Führungen 18 und den Magneten 16 zu verhindern.

Die Metallplatten 24 und die Magneten 16 sind so ausgebildet, dass eine magnetische Haltekraft zwischen den Metallplatten 24 und den Magneten 16 größer ist als eine magnetische Haltekraft zwischen den Magneten 16 und der Wandplatte 20. Dadurch ist sichergestellt, dass beim Abheben des Fußabschnitts 12 die Magneten 16 im Gehäuse 26 verbleiben und nicht an der Wandplatte 20 bzw. der Bespannung 22 haften bleiben. Dies kann bereits dadurch sichergestellt werden, dass die Metallplatte 24 dicker ist als die Wandplatte 20 und aus dem gleichen Material besteht, beispielsweise Stahlblech.

Wie in der Fig. 2 noch zu erkennen ist, weist das Gehäuse 26 des Fußabschnitts 12 einen Hohlraum 28 auf, der zu der in Fig. 2 erkennbaren Rückseite des Gehäuses 26 hin offen ist und von der Vorderseite des Gehäuses 26 her, wie in Fig. 1 zu erkennen ist, über eine langgestreckte Öffnung 30 zugänglich ist. Die langgestreckte Öffnung 30 ist rechteckförmig und weist ein Längen-/Breitenverhältnis von etwa 7:1 auf. Die Öffnung 30 ist im montierten Zustand des Magnetwandsystems waagerecht angeordnet und dafür vorgesehen, dass sich ein Eingreifabschnitt 32 des Halterabschnitts 14 in den Hohlraum 28 hinein erstrecken und am Gehäuse 26 angreifen kann. Über das Eingreifteil 32 ist der Halterabschnitt 14 lösbar an dem Gehäuse 26 befestigt. Der Halterabschnitt 14 kann aber dennoch in sehr einfacher Weise durch Herausschwenken aus dem Gehäuse 26 bzw. der Öffnung 30 gelöst und beispielsweise durch einen anderen Halterabschnitt ersetzt werden.

Anhand der Schnittdarstellung der Fig. 7 ist gut zu erkennen, dass der Eingreifabschnitt 32 L-förmig ausgebildet ist und rechtwinklig von einem Plattenabschnitt 34 ausgeht, an dem ein U-Bügel 36 befestigt ist. Der Plattenabschnitt 34 ist in einem sehr kleinen Winkel von etwa 1° bis 2° zur Vorderfläche des Gehäuses 26 angeordnet. Über das Eingreifen des Eingreifabschnitts 32 und das Anliegen des in Fig. 7 unteren Endes des Plattenabschnitts 34 ist der Halterabschnitt 14 am Fußabschnitt 12 gesichert.

Der L-förmige Halterabschnitt 32 erstreckt sich durch die Öffnung 30 in der Vorderfläche des Gehäuses 26 hindurch in den Hohlraum 28 des Gehäuses 26. Der Hohlraum 28 ist mit einer Anschlagfläche 38 versehen, die parallel zur Vorderfläche des Gehäuses 26 angeordnet ist. Auf dieser Anschlagfläche liegt das freie Ende des Eingreifabschnitts 32 auf, so dass dadurch ein Gegenlager für den auf der Vorderfläche des Gehäuses 26 anliegenden Blechplattenabschnitt 34 geschaffen ist. Die Öffnung 30 bildet zusammen mit dem Hohlraum 28 und der Anschlagfläche 38 einen Hinterschnitt, in den der Eingreifabschnitt 32 eingehängt werden kann.

Ersichtlich kann der Halterabschnitt 14 in sehr einfacher Weise vom Fußabschnitt 12 gelöst werden, indem in der Darstellung der Fig. 7 der U-Bügel 36 um etwa 90° im Uhrzeigersinn verschwenkt wird. Anstelle des Halterabschnitts 14 können dann beispielsweise andere Halterabschnitte in den Fußabschnitt 12 eingesetzt werden, vorausgesetzt diese weisen ebenfalls einen L-förmigen Eingreifabschnitt 32 auf.

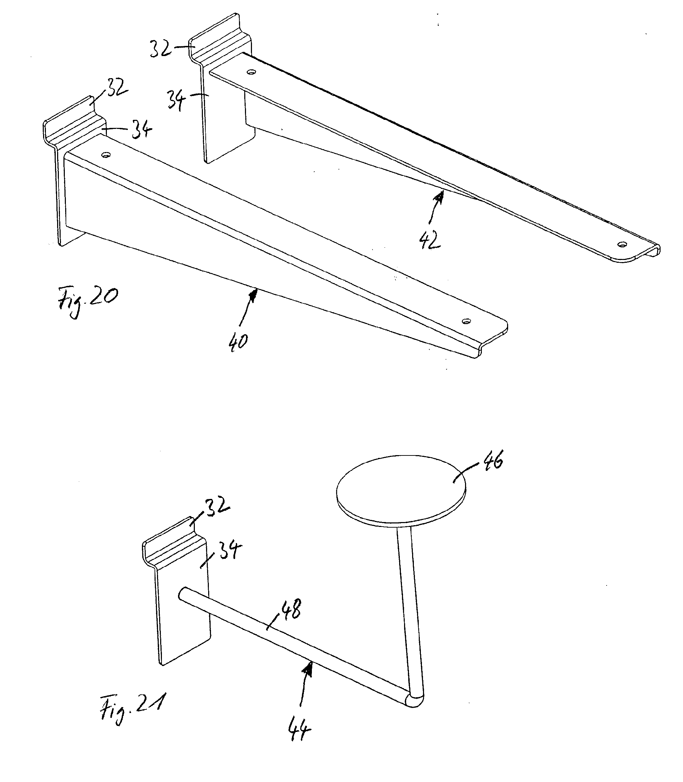

Die Darstellung der Fig. 20 zeigt zwei Halterabschnitte 40, 42 in Form eines linken bzw. rechtes Fachbodenträgers. Die Halterabschnitte 40, 42 weisen wie der Halterabschnitt 14 in Fig. 7 jeweils einen Plattenabschnitt 34 und ein Eingreifteil 32 auf, das dann genau wie anhand des Halterabschnitts 14 und Fig. 7 erläutert wurde, in den Fußabschnitt 12 eingesetzt werden kann. Die Halterabschnitte 40, 42 ermöglichen es dadurch, mittels zweier Fußabschnitte 12 einen Fachboden bzw. ein Präsentationsbrett an einer magnetisierbaren Wandplatte zu befestigen.

Die Darstellung der Fig. 20 zeigt ein weiteres Beispiel für einen Halterabschnitt 44. Der Halterabschnitt 44 weist einen Präsentationsteller 46 auf, der an einem im rechten Winkel abgebogenen Metallstab 48 befestigt ist. Der Metallstab 48 ist dann wiederum mit einem Plattenabschnitt 34 und einem Eingreifabschnitt 32 verbunden, um in einen Fußabschnitt 12 eingehängt zu werden.

Durch die Erfindung wird damit ein sehr flexibler Wandhalter für ein Magnetwandsystem bereitgestellt. Unterschiedlichste Anwendungen, beispielsweise Verkaufswände für Blisterverpackungen unter Verwendung des Halterabschnitts 14 aus Fig. 1, Präsentationsregale unter Verwendung der Halterabschnitte 40, 42 der Fig. 20 oder eine Einzelpräsentation von Gegenständen unter Verwendung des Halterabschnittes 44 der Fig. 21 können mit denselben Fußabschnitten 12 gemäß Fig. 1 verwirklicht werden.

Die Darstellungen der Fig. 3 bis 6 zeigen verschiedene Ansichten des erfindungsgemäßen Wandhalters 10. Anhand der Darstellung der Fig. 6, die den Fußabschnitt 12 von hinten zeigt, ist die Anordnung der Magnete 16 gut zu erkennen. Jeweils drei Magnete 16 sind auf einer gemeinsamen Metallplatte 24 angeordnet, die in der Draufsicht in Fig. 17 dargestellt ist. Insgesamt sind 15 Magnete 16 in waagerechten Reihen zu jeweils drei Magneten 16 angeordnet. In der Darstellung der Fig. 6 sind von einer oberen Begrenzung des Gehäuses 26 her gesehen zunächst zwei Metallplatten 24 mit jeweils drei Magneten 16 untereinander angeordnet. Auf die zweite Reihe der Magneten 16 folgt dann der Hohlraum 28, in den der Eingreifabschnitt 32 eingesetzt ist, und die Öffnung 30. Unterhalb des Hohlraums 28 sind wieder zwei waagerecht angeordnete Reihen von jeweils drei Magneten 16 auf Metallplatten 24 vorgesehen. Unterhalb der dann von oben gesehen vierten Magnetreihe folgt ein weiterer Hohlraum 50 in dem Gehäuse, der gerade so breit gewählt ist, dass entweder eine weitere Magnetreihe oder ein weiterer Hohlraum zur Anordnung eines Eingreifabschnitts angeordnet werden könnte. Unterhalb des Hohlraums 50 folgt dann eine weitere Magnetreihe mit drei Magneten 16 auf der Metallplatte 24. Durch Vorsehen des Hohlraums 50 ist konstruktiv bereits die Möglichkeit geschaffen, entweder die Haltekraft des Fußabschnitts 12 durch Vorsehen einer weiteren Magnetreihe zu erhöhen oder um Halterabschnitte mit anders gestalteten oder zusätzlichen Eingreifabschnitten an dem Fußabschnitt 12 anordnen zu können.

Die Darstellungen der Fig. 8 bis 14 zeigen verschiedene Ansichten des Fußabschnitts 12 bei abgenommenem Halterabschnitt 14. Diese Ansichten entsprechen bezüglich der Anordnung des Fußabschnitts 12 den Abbildungen der Fig. 1 bis Fig. 7, so dass auf deren detaillierte Erläuterung zur Vermeidung von Wiederholungen verzichtet wird.

Fig. 14 zeigt eine Ansicht der Schnittebene XIV-XIV aus Fig. 13. Bei abgenommenem Halterabschnitt 14 ist gut die Anschlagfläche 38 in dem Hohlraum 28 des Gehäuses 26 zu erkennen. Weiter ist gut zu erkennen, dass die Metallplatten 24 in das gehäuseseitige Ende der Führungen 18 eingerastet sind und dadurch in einer exakt definierten Position im Gehäuse 26 gehalten werden. Die Magneten 16 sind unmittelbar auf die Metallplatten 24 aufgesetzt und, aufgrund ihrer in Fig. 18 und Fig. 19 zu erkennenden Kreisscheibenform mit planparallelen Haftflächen, dadurch ebenfalls exakt ausgerichtet. Wie in den Darstellungen der Fig. 14 aber auch in Fig. 11 und Fig. 12 gut zu erkennen ist, ragt eine dem Gehäuse 26 abgewandte Haftfläche der Magneten 16, die infolgedessen der magnetisierbaren Wandplatte 20 zugewandt ist, geringfügig über den unteren Rand 52 des Gehäuses 26 hinaus. Dadurch kann sichergestellt werden, dass die Haftflächen der Magneten 16 immer in möglichst geringem Abstand zu der Wandplatte 20 angeordnet sind und am Beispiel der Fig. 14 unmittelbar auf der Stoffbespannung 22 aufliegen. Dadurch kann eine hohe Haltekraft des Fußabschnitts 12 an der Wandplatte 20 sichergestellt werden, sowohl in einer Richtung senkrecht oder schräg zur Wandplatte 20 als auch in einer Richtung parallel zur Wandplatte 20.

Die Darstellung der Fig. 15 zeigt eine Ansicht auf die Schnittebene XV-XV in Fig. 13. Gut zu erkennen ist die Ausbildung des Hohlraums 28 in dem Gehäuse 26 sowie die Ausbildung und Anordnung der Anschlagfläche 38 für das freie Ende des Eingreifabschnitts 32 des Halterabschnitts 14, siehe auch Fig. 7.

Die Darstellung der Fig. 16 zeigt eine Ansicht auf die Schnittebene XVI-XVI aus Fig. 13. Diese Schnittebene ist durch eine über den gesamten Querschnitt des Gehäuses 26 durchgehende Versteifungsrippe gelegt. Gut zu erkennen ist der trapezförmige Querschnitt des Gehäuses 26 des Fußabschnitts 12 sowie dass die Magneten 16 geringfügig über den unteren Rand bzw. die untere größere Grundfläche des trapezförmigen Querschnitts des Gehäuses 26 vorragen.

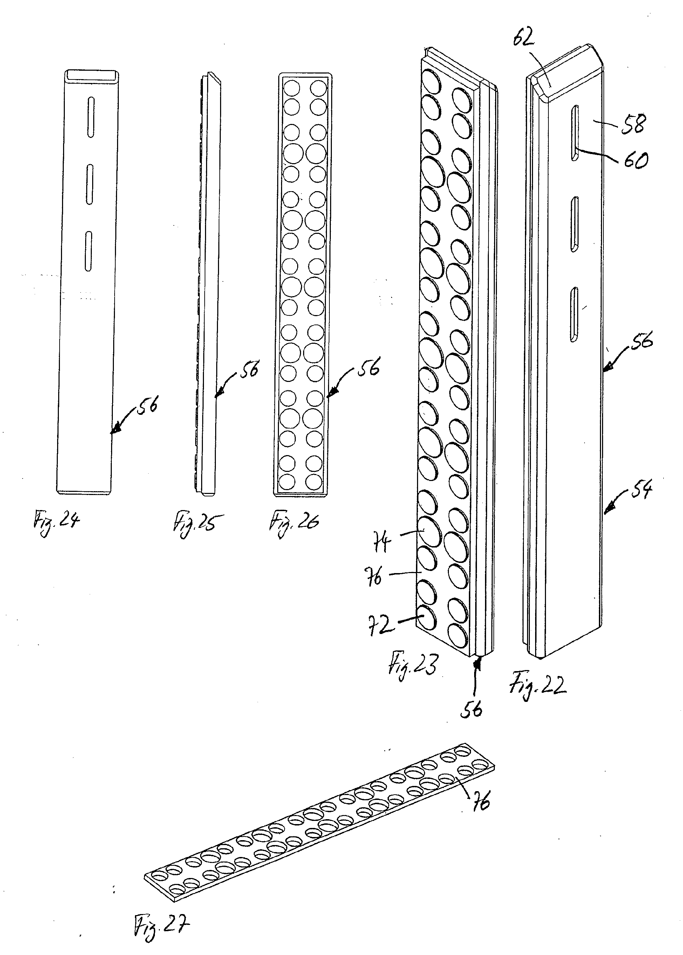

Die Darstellungen der Fig. 22 bis 26 zeigen verschiedene Ansichten eines Wandhalters gemäß einer weiteren bevorzugten Ausführungsform der Erfindung. Der Wandhalter 54 ist in der Darstellung der Fig. 22 von schräg vorne und ohne einen passenden Halterabschnitt dargestellt. Der Wandhalter 54 weist einen rohrförmigen Fußabschnitt 56 auf, der als Abschnitt eines Rechteckrohres ausgebildet ist. Der Fußabschnitt 56 besteht aus Metall und weist eine Vorderfläche 58 auf, die mit insgesamt drei langgestreckten Öffnungen 60 versehen ist, die untereinander und parallel zu einer Mittellängsachse des Fußabschnitts 56 angeordnet sind. Zusammen mit dem Innenraum 62 des rohrförmigen Fußabschnitts 56 bilden die Öffnungen 60 einen Hinterschnitt aus, in den Eingreifabschnitte eines Halterabschnittes eingesetzt werden können. Solche Eingreifabschnitte können in bekannter Weise hakenförmig ausgebildet sein.

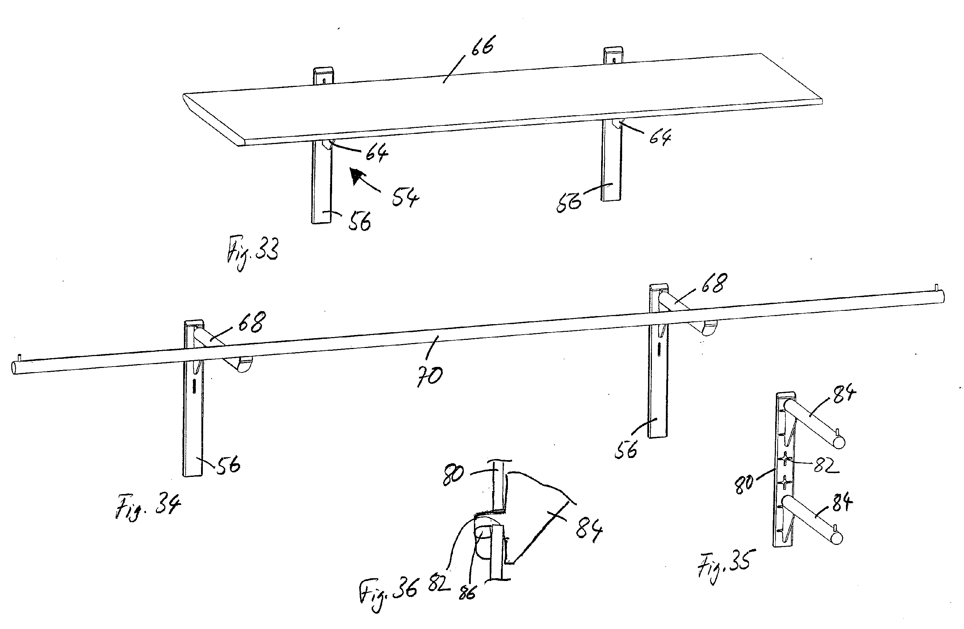

Die Darstellung der Fig. 33 zeigt zwei nebeneinander angeordnete Fußabschnitte 56, die mit einem Halterabschnitt 64 jeweils in Form eines Fachbodenträgers versehen sind. Eingreifabschnitte der Halterabschnitte 64 sind hakenförmig ausgebildet und in an und für sich bekannter Weise in die Öffnungen 60 im Fußabschnitt 56 eingehängt. Mittels der beiden Fußabschnitte 56 kann dadurch ein Regalbrett 66 an einer Wandplatte eines Magnetwandsystems angeordnet werden.

Die Darstellung der Fig. 34 zeigt die beiden Fußabschnitte 56 erneut, wobei anders gestaltete Halterabschnitte 68 in die Öffnungen 60 eingehängt sind. Die beiden Halterabschnitte 68 tragen eine Kleiderstange 70.

Um die Warenpräsentation an einer magnetisierbaren Wandplatte daher von dem Regalbrett 66 der Fig. 33 auf die Kleiderstange 70 der Fig. 34 umzubauen, ist es lediglich erforderlich, die Halterabschnitte 64 gegen die Halterabschnitte 68 auszuwechseln und die Kleiderstange 70 vorzusehen. Die Fußabschnitte 56 können weiter verwendet werden und können möglicherweise sogar in ihrer Position verbleiben. In der Regel wird bei einem Umbau der Präsentation aber gleichzeitig die Stoffbespannung 22, siehe Fig. 14, ausgewechselt, um mit wenigen Handgriffen eine völlig neue Warenpräsentation zu schaffen. Die erfindungsgemäßen Wandhalter ermöglichen einen solchen flexiblen Einsatz und erleichtern häufige Umbauten der Präsentationsflächen dadurch, dass ein- und dieselben Fußabschnitte 12, 56 mit unterschiedlichsten Halterabschnitten 14, 40, 42, 44, 64, 68 verwendet werden können.

Die Darstellung der Fig. 23 zeigt den Fußabschnitt 56 der Fig. 22 von schräg hinten. Wie bereits ausgeführt wurde, besteht der Fußabschnitt 56 aus einem rechteckförmigen, dickwandigen Metallrohr und eine Rückseite des Metallrohrs stellt dadurch eine Metallplatte bereit, auf die Magneten 72, 74 unmittelbar aufgesetzt werden können. Bei der Ausführungsform gemäß Fig. 22 und 23 werden scheibenförmige Magnete 72, 74 unterschiedlicher Größe verwendet. Die Magnete 72, 74 werden in ihrer Position auf der Rückseite des Fußabschnitts 56 mittels eines gelochten Positionierstreifens 76 aus Kunststoff gehalten, der einzeln in Fig. 27 dargestellt ist. Der Positionierstreifen 76 kann auf die Rückseite des Fußabschnitts 56 aufgeklebt sein. Die Magneten 72, 74 sind unmittelbar auf die Rückseite des Fußabschnitts 56 aufgesetzt und haften bereits dadurch sicher am Fußabschnitt 56. Zusätzlich ist es selbstverständlich möglich, wenn auch nicht erforderlich, die Magneten 72 mit dem Positionierstreifen 76 zu verkleben oder in sonstiger Weise an diesen festzuhalten. Das unmittelbare Aufsetzen der Magneten 72, 74 auf die Rückseite des Fußabschnitts 56 stellt aber die planparallele Ausrichtung der Haftflächen der Magnete 72, 74 sicher. Eine eventuelle zusätzliche Befestigung in den Bohrungen des Positionierstreifens 76 muss daher so ausgebildet sein, dass sie die planparallele Ausrichtung und das dichte Anliegen an der Rückseite des Fußabschnitts 56 nicht behindert.

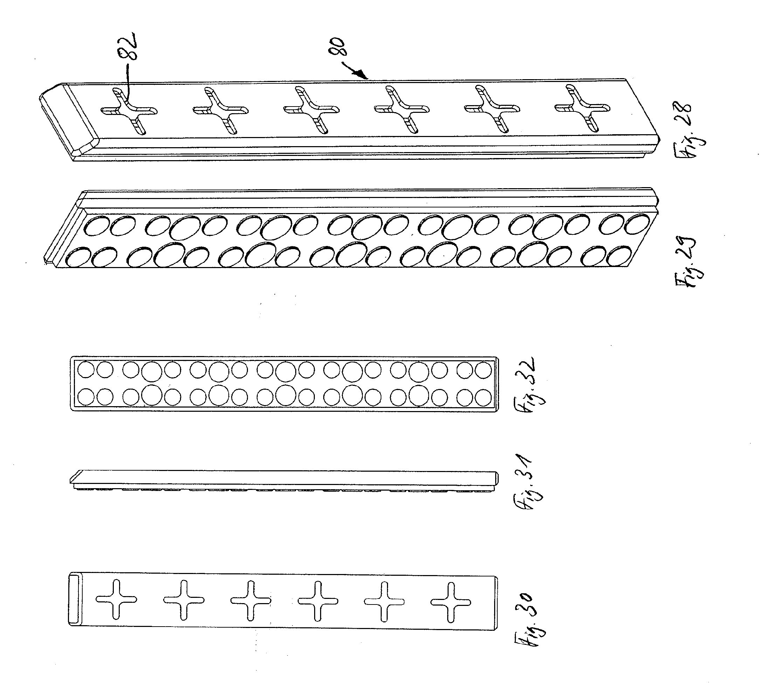

Die Darstellungen der Fig. 28 bis 32 zeigen eine weitere bevorzugte Ausführungsform eines Fußabschnitts 80 eines erfindungsgemäßen Wandhalters. Der Fußabschnitt 80 ist mit Ausnahme der Ausbildung von Öffnungen 82 in seiner Vorderfläche identisch zu dem Fußabschnitt 56 der Fig. 22 bis 26 ausgebildet, so dass auf die erneute Erläuterung dieser Merkmale verzichtet wird.

Die Öffnungen 82 sind jeweils kreuzförmig ausgebildet, wobei entlang einer Mittellängsachse des Fußabschnitts 80 insgesamt sechs kreuzförmige Öffnungen 82 untereinander angeordnet sind. Die kreuzförmigen Öffnungen 82 bestehen jeweils aus zwei langgestreckten Öffnungen, die sich kreuzen, wobei im Übergangsbereich abgerundete Ecken vorgesehen sind. Jeweils eine der langgestreckten Öffnungen liegt parallel zu einer Mittellängsachse des Fußabschnitts 80, die andere, kreuzende langgestreckte Öffnung liegt senkrecht zur Mittellängsachse des Fußabschnitts 80.

Zusammen mit dem Innenraum des Metallrechteckrohres des Fußabschnitts 80 bilden die Öffnungen 82 jeweils Hinterschnitte, um Eingreifteile von Halterabschnitten an dem Fußabschnitt 80 zu sichern.

Die Darstellung der Fig. 35 zeigt den Fußabschnitt 80 der Fig. 28, wobei zwei Halterabschnitte 84 an dem Fußabschnitt 80 befestigt sind. Die Halterabschnitte 84 weisen als Eingreifabschnitte jeweils zwei Querstäbe auf, die in zwei benachbarte kreuzförmige Öffnungen 82 eingeschoben und dann geringfügig nach unten verschoben werden. Dadurch hintergreifen die Querstäbe 86 oder Querriegel die Vorderwand des Fußabschnitts 80 und die Halterabschnitte 84 können fest am Fußabschnitt 80 verriegelt werden.

Die Darstellung der Fig. 36 zeigt schematisch das Eingreifen der Halterabschnitte 84 mit den Querstäben in den Fußabschnitt 80.

Die langgestreckten Öffnungen 60 in dem Fußabschnitt 56 der Fig. 22 als auch die kreuzförmigen Öffnungen 82 in dem Fußabschnitt 80 der Fig. 28 können auch zum Einsetzen von an und für sich bekannten Spannschlössern verwendet werden. Solche bekannten Spannschlösser weisen exzenterbetätigte Klemmhaken auf, die dann in die Öffnungen 60 bzw. 82 eingeführt werden, exzenterbetätigt gespreizt und zurückgezogen werden und sich dadurch an dem Hinterschnitt verhaken, der durch die Öffnungen 60, 82 und den dahinter liegenden Hohlraum gebildet wird. Dadurch können beispielsweise auch Aluminiumprofile, sogenannte Zargen, mittels der Fußabschnitte 56, 80 an einer magnetisierbaren Wand verankert werden.

## Patentansprüche

1. Wandhalter für ein Magnetwandsystem mit einem Fußabschnitt (12; 56, 80) mit wenigstens einem Magneten (16) zum Aufsetzen auf eine magnetisierbare Wandplatte (20) und einem mit dem Fußabschnitt (12; 56; 80) verbundenen Halterabschnitt (14; 40; 42; 64; 68; 84), **dadurch gekennzeichnet, dass** der Fußabschnitt (12; 56; 80) ein Gehäuse (26) mit wenigstens einer Öffnung (30; 60; 82) aufweist, wobei innerhalb des Gehäuses (26) hinter der Öffnung (30; 60; 82) ein Hohlraum (28) ausgebildet ist, der zusammen mit der Öffnung (30; 60; 82) einen Hinterschnitt bildet, und dass der Halterabschnitt (14; 40; 42; 64; 68; 84) wenigstens ein passend zur Öffnung (30; 60; 82) und dem Hinterschnitt ausgebildetes Eingreifteil (32) aufweist.

2. Wandhalter nach Anspruch 1, **dadurch gekennzeichnet, dass** die Öffnung (30; 60; 82) wenigstens einen langgestreckten Abschnitt mit einem Längen/Breitenverhältnis größer als 1 aufweist.

3. Wandhalter nach Anspruch 2, **dadurch gekennzeichnet, dass** der langgestreckte Abschnitt der Öffnung (30; 82) im montierten Zustand des Wandhalters waagerecht angeordnet ist und die Öffnung (30; 82) zusammen mit dem Hohlraum (28) einen innerhalb des Gehäuses (26) oberhalb der Öffnung (30; 82) liegenden Hinterschnitt ausbildet.

4. Wandhalter nach Anspruch 3, **dadurch gekennzeichnet, dass** das Eingreifteil (32) des Halterabschnitts (14) L-förmig ausgebildet ist.

5. Wandhalter nach einem der vorstehenden Ansprüche, **dadurch gekennzeichnet, dass** die Öffnung (82) kreuzförmig ausgebildet ist.

6. Wandhalter nach einem der vorstehenden Ansprüche, **dadurch gekennzeichnet, dass** der Fußabschnitt (56; 80) rohrförmig ausgebildet ist, wobei ein Abschnitt der Außenwand des Fußabschnitts (56; 80) mit dem wenigstens einen Magneten (16) und ein anderer Abschnitt der Außenwand des Fußabschnitts (56; 80) mit der wenigstens einen Öffnung (60; 82) versehen ist.

7. Wandhalter nach Anspruch 6, **dadurch gekennzeichnet, dass** der Fußabschnitt (56; 80) rohrförmig mit rechteckförmigen Querschnitt ausgebildet ist.

8. Wandhalter nach Anspruch 6 oder 7, **dadurch gekennzeichnet, dass** der rohrförmige Fußabschnitt (56; 80) als Metallrohr ausgebildet ist.

9. Wandhalter nach einem der Ansprüche 6 bis 8, **dadurch gekennzeichnet, dass** der Querschnitt des rechteckrohrförmigen Fußabschnitts (56; 80) ein Längen/Breitenverhältnis zwischen 2:1 und 5:1 aufweist.
